# EUROPÄISCHE PATENTANMELDUNG

(11) **EP 1 832 776 A2**
(43) Veröffentlichungstag der Anmeldung: **12.09.2007**
(21) Anmeldenummer: 07003723.9
(22) Anmeldetag: 23.02.2007
(51) Int. Cl.: F16D 48/06

(54) **Verfahren und Vorrichtung zum Steuern und/oder Regeln einer automatisierten Kupplung**

(30) Priorität: 09.03.2006 DE 102006010936
(71) Anmelder: LuK Lamellen und Kupplungsbau Beteiligungs KG, 77815 Bühl (DE)
(72) Erfinder: Reuschel, Michael, 77833 Ottersweier (DE)

(57) **Zusammenfassung**

Bei einem Verfahren zum Steuerung und/oder Regeln einer automatisierten Kupplung (10), insbesondere im Antriebsstrang eines Fahrzeugs, bei dem ein Betätigungsglied (16), dessen Stellung das von der Kupplung (10) übertragbare Kupplungsmoment bestimmt, zur Einstellung eines vorbestimmten Kupplungsmoments entsprechend einer Kennlinie betätigt wird, wird das Betätigungsglied (16) entsprechend einer Kennlinie betätigt, die in einem ersten Bereich des Kupplungsmoments das Kupplungsmoment in Abhängigkeit von der Stellung des BetätigungsgIiedes (16) und in einem zweiten Bereich des Kupplungsmoments das Kupplungsmoment in Abhängigkeit von der vom Betätigungsglied (16) auf die Kupplung (10) aufgebrachten Kraft angibt.

## Beschreibung

Die Erfindung betrifft ein Verfahren und eine Vorrichtung zum Steuern und/oder Regeln einer automatisierten Kupplung, insbesondere im Antriebsstrang eines Fahrzeugs.

Automatisierte Kupplungen finden zunehmend Eingang in moderne Kraftfahrzeuge. Die Steuerung bzw. Regelung der Kupplung erfolgt meist anhand einer Kennlinie, die das Kupplungsmoment abhängig von der Stellung eines Betätigungsgliedes angibt. Das Betätigungsglied wird von einem Aktor in die dem jeweils erwünschten übertragbaren Kupplungsmoment entsprechende Stellung bewegt.

Ein bei der Kupplungssteuerung bzw. -regelung auftretendes Problem liegt darin, dass in der Momentenkennlinie ein oder mehrere Bereiche vorkommen, in denen sich das übertragbare Kupplungsmoment mit einer Änderung der Stellung des Betätigungsgliedes sehr stark ändert, so dass an den das Betätigungsglied bewegenden Aktor und dessen Steuerung bzw. Regelung hohe Anforderungen gestellt sind.

Der Erfindung liegt die Aufgabe zugrunde, ein Kupplungssteuer- bzw. -regelverfahren anzugeben, bei dem trotz vermindertem Aufwand bei der Steuerung bzw. Regelung eine hohe Steuerungs- bzw. Regelungsgüte erzielt wird.

Diese Aufgabe wird mit einem Verfahren gemäß dem Anspruch 1 gelöst.

Das Verfahren gemäß dem Anspruch 1 wird mit den Merkmalen der Ansprüche 2 und 3 in vorteilhafter Weise weitergebildet.

Der Anspruch 4 kennzeichnet eine Vorrichtung zur Lösung der Erfindungsaufgabe.

Diese Vorrichtung wird mit den Merkmalen der Ansprüche 5 bis 8 in vorteilhafter Weise weitergebildet.

Bei einem erfindungsgemäßen Verfahren zum Steuern und/oder Regeln einer automatisierten Kupplung, insbesondere im Antriebsstrang eines Fahrzeugs, wird ein Betätigungsglied, dessen Stellung das von der Kupplung übertragbare Kupplungsmoment bestimmt, zur Einstellung eines vorbestimmten Kupplungsmoments entsprechend einer Kennlinie betätigt, wobei das Betätigungsglied entsprechend einer Kennlinie betätigt wird, die in einem ersten Bereich des Kupplungsmoments das Kupplungsmoment in Abhängigkeit von der Stellung des Betätigungsgliedes und in einem zweiten Bereich des Kupplungsmoments das Kupplungsmoment in Abhängigkeit von der vom Betätigungsglied auf die Kupplung aufgebrachten Kraft angibt.

Mit dem erfindungsgemäßen Verfahren wird erreicht, dass die Änderung des Kupplungsmoments in Abhängigkeit von der die Stellung des Betätigungsgliedes bestimmenden Steuergröße in einem beherrschbaren Bereich, z.B. möglichst gering, gehalten wird, so dass an die Genauigkeit, mit der die Steuergröße eines das Betätigungsglied betätigenden Aktors gesteuert bzw. geregelt wird, keine nur mit hohem Aufwand erfüllbare Anforderungen gestellt werden.

Vorteilhaft ist in dem Kupplungsmomentbereich, in dem die das Kupplungsmoment in Abhängigkeit von der Kraft angebende Kennlinie verwendet wird, die Änderung des Kupplungsmoments bei einer vorbestimmten Änderung der Stellung des Betätigungsgliedes größer als in dem anderen Kupplungsmomentbereich.

Bei dem erfindungsgemäßen Verfahren kann eine Kraft/Wegkennlinie des Betätigungsgliedes aufgenommen werden, über die die Kupplungsmoment-Kraft-Kennlinie und die Kupplungsmoment/Wegkennlinie aneinander angepasst werden.

Bei einer erfindungsgemäßen Vorrichtung zum Steuern und/oder Regeln einer automatisierten Kupplung, insbesondere im Antriebsstrang eines Fahrzeugs, die einen Aktor zum Bewegen eines Betätigungsgliedes der Kupplung und eine elektronische Steuereinrichtung, die den Aktor entsprechend in ihr abgelegten Kennlinien in Abhängigkeit von Betriebsparametern steuert, sind in der Steuereinrichtung wenigstens zwei Kennlinien gespeichert, deren eine das übertragbare Kupplungsmoment in Abhängigkeit von der Stellung des Betätigungsgliedes und deren andere das übertragbare Kupplungsmoment in Abhängigkeit von der vom Betätigungsglied auf die Kupplung aufgebrachten Kraft enthält, und ist in der Steuereinrichtung eine Umschalteinrichtung vorgesehen, die die Steuerung des Aktors von der einen Kennlinie auf die andere Kennlinie umschaltet.

In wenigstens einem Bereich des übertragbaren Kupplungsmoments wird die eine der beiden Kennlinien und in einem anderen Bereich des übertragbaren Kupplungsmoments die andere der beiden Kennlinien aktiviert.

Die Umschalteinrichtung aktiviert beispielsweise die das Kupplungsmoment in Abhängigkeit von der Kraft angebende Kennlinie in einem Kupplungsmomentbereich, in dem die Änderung des Kupplungsmoments bei einer vorbestimmten Änderung der Stellung des Betätigungsgliedes größer ist als in dem anderen Kupplungsmomentbereich.

Die Kupplung kann beispielsweise eine in Schließstellung gedrückte Kupplung sein.

Weiter kann die Kupplung vorteilhaft eine Kupplung eines Parallelschaltgetriebes sein. Solche Parallelschaltgetriebe sind an sich bekannt und enthalten zwei Teilgetriebe, denen jeweils eine eigene Kupplung zugeordnet wird, wobei das Parallelschaltgetriebe jeweils in der Übersetzung arbeitet, die in dem Teilgetriebe eingelegt ist, dessen Kupplung geschlossen ist.

Die Erfindung wird im Folgenden anhand schematischer Zeichnungen beispielsweise und mit weiteren Einzelheiten erläutert.

In den Figuren stellen dar:
- Figur 1: eine schematische Darstellung einer Kupplungsbetätigungsvorrichtung,
- Figuren 2 bis 5: unterschiedliche Kennlinien zur Erläuterung der Erfindung.

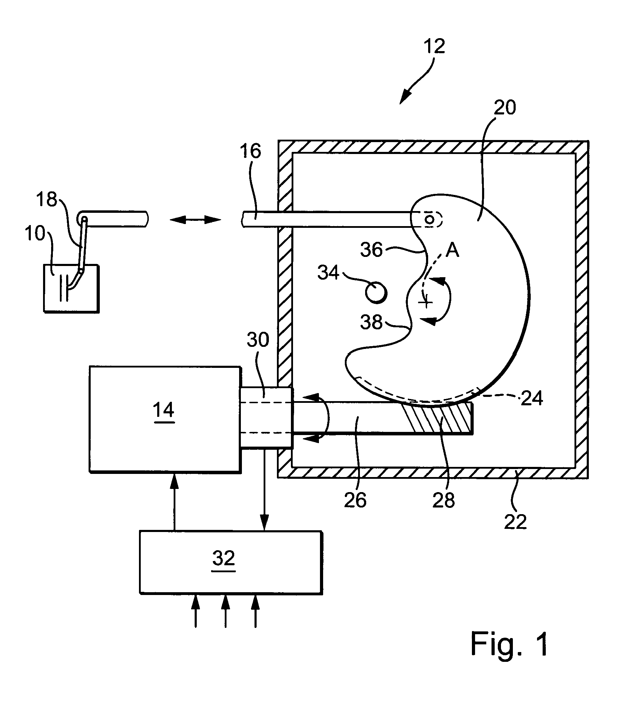

Gemäß Figur 1 ist eine insgesamt mit 10 bezeichnete Kupplung über einen insgesamt mit 12 bezeichneten Übertragungsmechanismus mit einem Aktor, im dargestellten Beispiel einem Elektromotor 14, verbunden.

Der Übertragungsmechanismus enthält ein Betätigungsglied 16, das direkt, über weitere Koppelglieder, oder über eine hydraulische Übertragungsstrecke mit einem Kupplungshebel 18 verbunden ist, dessen Stellung das von der Kupplung übertragbare Moment bestimmt.

Das Betätigungsglied 16 ist gelenkig mit einem Segmentrad 20 verbunden, das um eine Achse A drehbar in einem Gehäuse 22 gelagert ist. Das Gehäuse 22 kann starr mit dem Gehäuse der Kupplung oder einem Getriebegehäuse verbunden sein.

Das Segmentrad 20 weist an einem Umfangsbereich eine Verzahnung 24 auf, die mit einer an einer Ausgangswelle 26 des Elektromotors 14 ausgebildeten Schneckenverzahnung 28 kämmt. Zur Erfassung der Drehung der Ausgangswelle 26 ist ein Inkrementzähler 30 vorgesehen.

Zur Steuerung des Elektromotors 14 dient ein elektronisches Steuergerät 32 mit. Mikroprozessor und zugehörigen Speichereinrichtungen, wobei ein Eingang mit dem Inkrementzähler 30 und weitere Eingänge mit Ausgängen von Sensoren oder einem anderen Steuergerät, gegebenenfalls über einen Bus, verbunden sind, über die das Steuergerät 32 mit für den Betrieb der Kupplung relevanten Daten versorgt wird. Ein Ausgang des Steuergeräts 32 ist mit dem Elektromotor 14 verbunden.

Die Drehbarkeit des Segmentrades 20 ist durch wenigstens einen Anschlag 34 begrenzt, an dem eine Anschlagfläche 36 des Segmentrades am Ende des Betätigungsweges des Betätigungsgliedes 16 bei Drehung des Segmentrades 20 in Gegenuhrzeigerrichtung anliegt. Die Drehbarkeit des Segmentrades 20 in Uhrzeigerrichtung ist dadurch begrenzt, dass eine weitere Anschlagfläche 38 in anlagernden Anschlag 34 kommt.

Aufbau und Funktion der beschriebenen Anordnung sind an sich bekannt und werden daher bezüglich der bekannten Umfänge im Einzelnen nicht erläutert.

In dem Steuergerät 32 ist wenigstens eine Kennlinie abgelegt, die das von der Kupplung 10 übertragbare Moment in Abhängigkeit von der Stellung des Kupplungshebels 18 bzw. der des Betätigungsgliedes 16 angibt. Die Stellung des Betätigungsgliedes 16 ist mit Hilfe des Inkrementzählers 30 bekannt, dessen Zählstand durch bei Bedarf oder periodisch erfolgende Absoluteichung des Zählstandes, indem beispielsweise das Segmentrad 20 bis zur Anlage an dem Anschlag 34 bewegt wird, indexiert wird, so dass aus dem Zählstand auf die Stellung des Betätigungsgliedes 16 geschlossen werden kann. Andere Möglichkeiten, die Kennlinie immer wieder zu aktualisieren, bestehen darin, den geschlossenen Zustand der Kupplung oder deren Greifpunkt durch Schlupf und/oder Drehmomentmessung der Kupplung und Zuordnung des Zählstandes zu vorbestimmten Funktionszuständen der Kupplung zu aktualisieren.

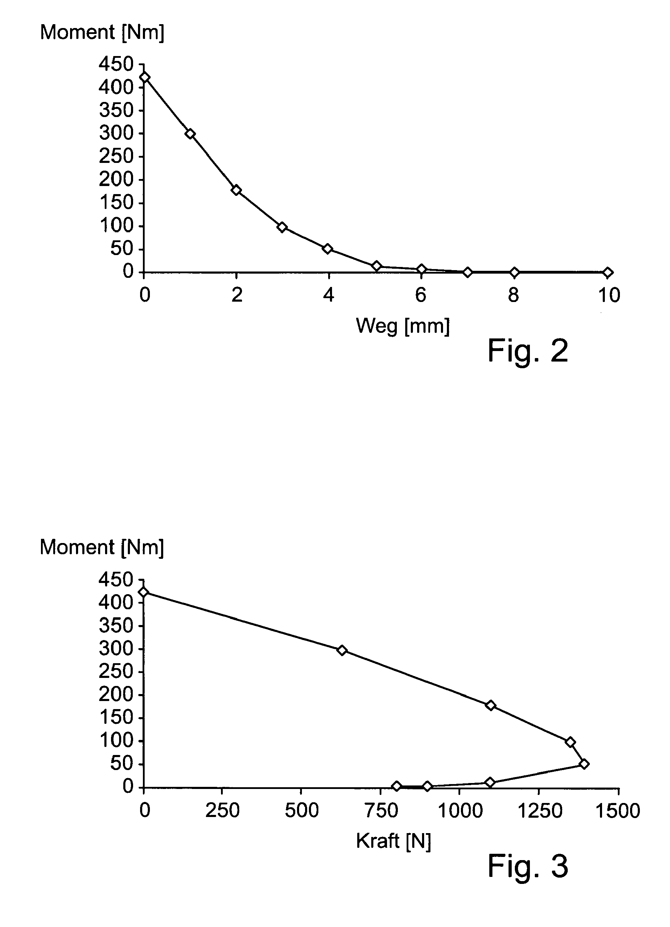

Je nach in der Kupplung verwendeten Federn, kinematischen Übersetzungen, Bauart der Kupplung (zugedrückt oder offengedrückt) kann die die Abhängigkeit des übertragbaren Kupplungsmoments vom Weg bzw. der Stellung des Betätigungsgliedes 16 unterschiedlichste Form aufweisen. Figur 2 zeigt ein Beispiel einer solchen Kennlinie, die im Bereich zwischen einem übertragbaren Drehmoment von 0 bis 100 Nm relativ flach verläuft und über 100 Nm zunehmend steiler wird. Figur 3 zeigt für diese beispielhafte Kupplung die Kennlinie, die das übertragbare Kupplungsmoment in Abhängigkeit von der auf das Betätigungsglied 16 bzw. den Kupplungshebel 18 aufgebrachten Kraft angibt. Die Abhängigkeit des übertragbaren Moments von der Kraft, im dargestellten Beispiel der Ausrückkraft, ist im Bereich über 100 Nm verhältnismäßig flach. Unterhalb dieses Wertes ist der Verlauf nicht mehr eindeutig, da die Kraft in Folge der Kinematik der Kupplung ein Maximum durchläuft.

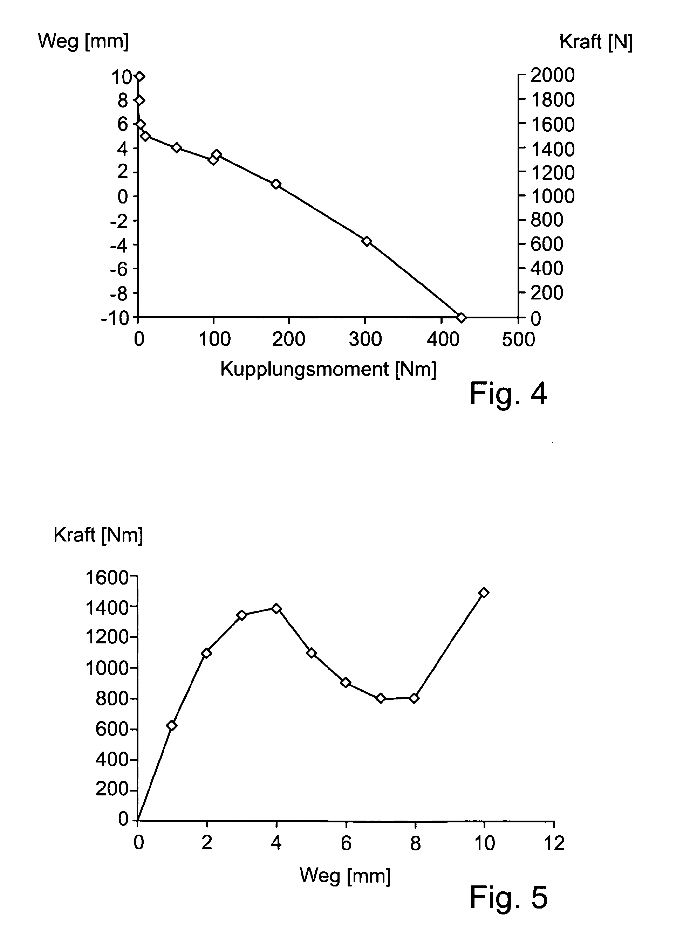

Erfindungsgemäß werden in dem Steuergerät 32 beide Kennlinien gespeichert und erfolgt die Steuerung bzw. Regelung der Kupplung unterhalb eines vorbestimmten übertragbaren Kupplungsmoments anhand der Kupplungsmoment/Wegkennlinie der Figur 2 und oberhalb dieses übertragbaren Moments, beispielsweise 100 Nm, entsprechend der Kupplungsmoment/Kraftkennlinie der Figur 3. Figur 4 zeigt die aus den Figuren 2 und 3 kombinierte Steuerkennlinie in umgekehrter Form, d.h. das Kupplungsmoment ist auf der Waagerechten aufgetragen. Der Weg ist auf der linksseitigen Ordinate, die Kraft auf der rechtsseitigen Ordinate aufgetragen. Wenn das vom Steuergerät 32 anzusteuernde Kupplungsmoment unter 100 Nm liegen soll, wird der linke Teil der Kennlinie benutzt. Oberhalb von 100 Nm wird der rechte Teil der Kennlinie benutzt. Durch bedarfsweise oder zyklisch erfolgende Adaption der Kennlinien oder unmittelbar wird in dem Steuergerät 32 eine nicht dargestellte Kraft/Wegkennlinie erzeugt, mit der gewährleistet ist, dass die beiden Kennlinienabschnitte der Figur 4 glatt ineinander übergehen.

Wenn mit weggesteuertem Kupplungsmoment gearbeitet wird, stellt das Steuergerät 32 anhand des Inkrementzählers 30 die Stellung des Betätigungsgliedes 16 ein. Wenn das übertragbare Kupplungsmoment durch die auf die Kupplung aufzubringende Kraft eingestellt wird, wird der Elektromotor 14 beispielsweise spannungsgesteuert angetrieben, da die von ihm auf das Betätigungsglied 16 ausgeübte Kraft von der Spannung abhängt, mit der der Elektromotor 14 beaufschlagt wird.

Bei Ansteuerung der Kupplung 10, beispielsweise mittels hydraulischen Drucks, wird ein den Hydraulikdruck erfassender Drucksensor verwendet, mit Hilfe dessen der Druck des Hydraulikmittels gesteuert wird. Es versteht sich, dass die auf die Kupplung 10 aufgebrachte Kraft auch unmittelbar mit jedem geeigneten Kraftsensor gemessen werden kann, entsprechend dessen Ausgangssignal der Elektromotor 14 angesteuert wird.

Das erfindungsgemäße Verfahren, bei dem in unterschiedlichen Bereichen auf unterschiedliche Steuerverfahren, beispielsweise Kraftsteuerung, Wegsteuerung, Drucksteuerung usw. umgeschaltet wird, ist besonders gut bei einem harmonischen Verlauf der Kraft/Wegkennlinie der Kupplung geeignet, wie sie beispielsweise bei zugedrückten, trockenen Kupplungen oder auch nass laufenden Kupplungen vorliegen.

Vorteilhaft wird jeweils mit der Kennlinie gearbeitet, bei der das einzustellende Kupplungsmoment eine geringere Abhängigkeit von der vom Aktor unmittelbar eingestellten Größe (Stellung des Betätigungsgliedes, auf das Betätigungsglied ausgeübte Kraft) hat.

Figur 5 zeigt ein Beispiel einer Kraft/Wegkennlinie einer Kupplung, deren Betätigungskraft 1400 Nm nicht übersteigt und bei einem Betätigungsweg von etwa 4 mm und etwa 10 mm erreicht. Zwischen diesen Stellungen durchläuft die Betätigungskraft ein Minimum.

Die vorbeschriebenen Wertebereiche und Kurvenverläufe sind nur beispielhaft. Die Erfindung ist für alle Arten von Kupplungen mit Kupplungsmoment/Wegkennlinien und Kupplungsmoment/Kraftkennlinien unterschiedlicher Steigungen geeignet, wobei vorteilhaft die Steigung der Kupplungsmoment/Wegkennlinie in einem Kupplungsmomentenbereich groß ist, in dem die Steigung der Kupplungsmoment/Kraftkennlinie klein ist und umgekehrt. Auch aus Gründen beispielsweise schlechter Steuerbarkeit der Spannung in einem vorbestimmten Spannungsbereich oder aus Gründen von Schnelligkeitsvorteilen einer Spannungssteuerung gegenüber einer Wegsteuerung kann zwischen verschiedenen Steuerarten umgeschaltet werden. Die Umschaltung kann jeweils in einer vorbestimmten Stellung des Betätigungsgliedes 16, die beispielsweise über den Inkrementzähler 30 erfasst wird, bei einer vorbestimmten, an dem Elektromotor 14 anliegenden Spannung oder auch bei einem vorbestimmten übertragbaren Moment der Kupplung 10, das durch Erfassung des Drehmoments und der Drehzahl eines mit der Antriebswelle der Kupplung verbundenen Motors sowie des Schlupfes der Kupplung erfasst werden kann, erfolgen.

### Bezugszeichenliste

- 10: Kupplung
- 12: Übertragungsmechanismus
- 14: Elektromotor
- 16: Betätigungsglied
- 18: Kupplungshebel
- 20: Segmentrad
- 22: Gehäuse
- 24: Verzahnung
- 26: Ausgangswelle
- 28: Schneckenverzahnung
- 30: Inkrementzähler
- 32: Steuergerät
- 34: Anschlag
- 36: Anschlagfläche
- 38: Anschlagfläche

## Patentansprüche

1. Verfahren zum Steuern und/oder Regeln einer automatisierten Kupplung, insbesondere im Antriebsstrang eines Fahrzeugs, bei welchem Verfahren ein Betätigungsglied, dessen Stellung das von der Kupplung übertragbare Kupplungsmoment bestimmt, zur Einstellung eines vorbestimmten Kupplungsmoments entsprechend einer Kennlinie betätigt wird,
**dadurch gekennzeichnet, dass** das Betätigungsglied entsprechend einer Kennlinie betätigt wird, die in einem ersten Bereich des Kupplungsmoments das Kupplungsmoment in Abhängigkeit von der Stellung des Betätigungsgliedes und in einem zweiten Bereich des Kupplungsmoments das Kupplungsmoment in Abhängigkeit von der vom Betätigungsglied auf die Kupplung aufgebrachten Kraft angibt.

2. Verfahren nach Anspruch 1, **dadurch gekennzeichnet, dass** in dem Kupplungsmomentbereich, in dem die das Kupplungsmoment in Abhängigkeit von der Kraft angebende Kennlinie verwendet wird, die Änderung des Kupplungsmoments bei einer vorbestimmten Änderung der Stellung des Betätigungsgliedes größer ist als in dem anderen Kupplungsmomentbereich.

3. Verfahren nach Anspruch 1 oder 2, **dadurch gekennzeichnet, dass** eine KraftWegkennlinie des Betätigungsgliedes aufgenommen wird, über die die Kupplungsmoment-Kraft-Kennlinie und die Kupplungsmoment/Wegkennlinie aneinander angepasst werden.

4. Vorrichtung zum Steuern und/oder Regeln einer automatisierten Kupplung, insbesondere im Antriebsstrang eines Fahrzeugs, enthaltend einen Aktor (14) zum Bewegen eines Betätigungsgliedes (16) der Kupplung (10) und eine elektronische Steuereinrichtung (14), die den Aktor entsprechend in ihr abgelegten Kennlinien in Abhängigkeit von Betriebsparametern steuert,
**dadurch gekennzeichnet, dass** in der Steuereinrichtung (14) wenigstens zwei Kennlinien gespeichert sind, deren eine das übertragbare Kupplungsmoment in Abhängigkeit von der Stellung des Betätigungsgliedes (16) und deren andere das übertragbare Kupplungsmoment in Abhängigkeit von der vom Betätigungsglied auf die Kupplung aufgebrachten Kraft enthält, und in der Steuereinrichtung eine Umschalteinrichtung vorgesehen ist, die die Steuerung des Aktors von der einen Kennlinie auf die andere Kennlinie umschaltet.

5. Vorrichtung nach Anspruch 4, **dadurch gekennzeichnet, dass** in wenigstens einem Bereich des übertragbaren Kupplungsmoments die eine der beiden Kennlinien und in einem anderen Bereich des übertragbaren Kupplungsmoments die andere der beiden Kennlinien aktiviert ist.

6. Vorrichtung nach Anspruch 4 oder 5, **dadurch gekennzeichnet, dass** die Umschalteinrichtung die das Kupplungsmoment in Abhängigkeit von der Kraft angebende Kennlinie in einem Kupplungsmomentbereich aktiviert, in dem die Änderung des Kupplungsmoments bei einer vorbestimmten Änderung der Stellung des Betätigungsgliedes größer ist als in dem anderen Kupplungsmomentbereich.

7. Vorrichtung nach einem der Ansprüche 4 bis 6, **dadurch gekennzeichnet, dass** die Kupplung (10) eine in Schließstellung gedrückte Kupplung ist.

8. Vorrichtung nach einem der Ansprüche 4 bis 7, **dadurch gekennzeichnet, dass** die Kupplung (10) eine Kupplung eines Parallelschaltgetriebes ist.
